# EUROPEAN PATENT SPECIFICATION

(11) **EP 2 129 541 B1**
(45) Date of publication and mention of the grant of the patent: **30.11.2011**
(21) Application number: 07747989.7
(22) Date of filing: 05.04.2007
(51) Int. Cl.: B60K 28/06, A61B 5/18, B60W 40/10, G08B 21/06, B62D 15/02

(54) **DRIVER ALERT DEVICE**
FAHRERWARNVORRICHTUNG
DISPOSITIF D'ALERTE DE CONDUCTEUR

(43) Date of publication of application: 09.12.2009
(73) Proprietor: Autoliv Development AB, 447 83 Vårgårda (SE)
(72) Inventor: GROLEAU, Laurent, F-86440 Migne-Auxances (FR); LEMASSON, Pascal, F-86130 St Georges Les Baillargeaux (FR)
(74) Representative: Beattie, Alex Thomas Stewart
(86) International application number: PCT/SE2007/000323
(87) International publication number: WO 2008/123804

(56) References cited:
- EP-A2- 0 856 432
- EP-A2- 0 856 432
- DE-U1- 20 101 014
- DE-U1-202004 001 832
- DE-U1-202004 001 832
- US-A1- 2004 178 901
- US-A1- 2004 178 901

## Description

### Technical field

The present invention relates to a driver alert device for use in a vehicle to alert a driver by means of mechanical vibrations perceivable to the driver via the steering wheel, comprising at least one vibration actuator unit arranged at the steering wheel.

### Background of the invention

EP 0 856 432 discloses a device having a pair of piezoelectric elements fitted to the rim of a steering wheel. The device is capable of alerting the driver by means of mechanical vibrations perceivable by touch and ear by the driver while the vehicle is running.

Prior proposed driver alert arrangements have been bulky and complex. Furthermore there is a need for a driver alert system with improved functionality. A driver alert system comprising the features of the preamble of claim 1 is known from DE 20 2004 01 832 U1.

### Summary of the invention

An object of the present invention is to provide an improved driver alert device compared to prior art.

In one aspect of the present invention, a driver alert device according to the introduction is further characterised in that said vibration actuator unit is arranged in a region of a connection of parts of the steering wheel arrangement. Thus a space efficient driver alert device may be provided. Vibrations caused by relative movement of parts of the steering wheel arrangement may be generated in order to alert a vehicle driver. The driver may be alerted in, for instance, an emergency situation. Such an emergency situation may be that a vehicle is approaching from one side of the vehicle. The vibrations may be generated in a preferred direction.

The driver alert device may be capable of generating at least two distinguishable vibration signals in order to adapt the alert signal for different situations. Thus it may be possible to combine different vibration signals depending on the emergency situation. The driver thus may receive additional information compared to a driver alert system generating a sole vibration signal. The vibration may differ in vibration frequency, location of the vibration and direction of the vibration. Thus the intensity, the location and the direction of the relative steering wheel movement may be varied.

Each vibration actuator unit may comprise a first and a second vibration generating means, such as piezoelectric elements or electromagnetic elements. It may then be possible to generate a relative movement of the steering wheel rim without deforming parts of a joint connecting parts of a steering wheel arrangement. This is possible since the vibrating element in each vibration actuator unit can be coupled in such a way that when one element is extending the other one is compressed. Thus loss of for instance the screws in a screwing joint may be avoided. Furthermore several types of vibration signals in the steering wheel may be generated.

Several vibration actuator units may be fitted in a connection between parts of the steering wheel arrangement in order to provide further combinations of vibration signals in the steering wheel.

Each vibration actuator unit may be integrated in a connection between parts of the steering wheel arrangement. Thus, the vibration actuation unit may form part of a connection, such as a joint, of the steering wheel arrangement. By connection is meant an attachment of parts of the steering wheel arrangement, for instance attachment of a steering wheel rim to a steering wheel frame or attachment of a steering wheel frame to a steering wheel hub. That is the vibration actuator unit may be integrated in a joint, such as a screwing joint, between parts of the steering wheel arrangement. For instance each vibration actuator unit may be integrated in a connector, such as a screw or bolt, connecting parts of the steering wheel arrangement. Thus a compact arrangement is achieved and no additional fastening means may be needed to mount the driver alert device.

Activation of a vibration actuator unit may generate a relative movement between parts of the steering wheel arrangement in order to alert the driver.

Relative movement between parts of the steering wheel arrangement directed perpendicularly to a steering wheel plane may be provided. Alternatively relative movement directed parallelly a steering wheel plane may be provided. Thus relative movement of the steering wheel rim in different directions may be provided in order to alert a driver differently in different situations.

Each vibration actuator unit may be arranged in the region of the connection between a steering wheel rim and a steering wheel spoke. Alternatively each vibration actuator unit may be arranged in the region of the connection between a steering wheel spoke and a steering wheel hub. Thus by activation of a vibration actuator unit a movement of the steering wheel rim relative a part of the steering wheel frame can be achieved.

### Brief description of the drawings

The present invention will now be described in more detail with the reference to the accompanying schematic drawings which show a preferred embodiment of the invention and in which:
Fig. 1 shows a perspective view of a vehicle steering wheel arrangement provided with a driver alert device according to an embodiment of the present invention.
Fig. 2a shows a section view of the steering wheel arrangement shown in figure 1.
Fig. 2b shows an activated vibration actuator unit in a first state.
Fig. 2c shows an activated vibration actuator unit in a second state.
Fig. 2d shows possible vibration directions of the device shown in fig 2a.
Fig. 2e shows further possible vibration directions of the device shown in fig 2a.
Fig. 2f shows further possible vibration directions of the device shown in fig 2a.
Fig. 2g shows further possible vibration directions of the device shown in fig 2a.
Fig. 3a shows a section view of another embodiment of a driver alert device.
Fig. 3b shows possible vibration directions of the device shown in fig 3a.
Fig. 3c shows further possible vibration directions of the device shown in fig 3a.
Fig. 3d shows further possible vibration directions of the device shown in fig 3a.
Fig. 3e shows further possible vibration directions of the device shown in fig 3a.

### Detailed description of a preferred embodiment

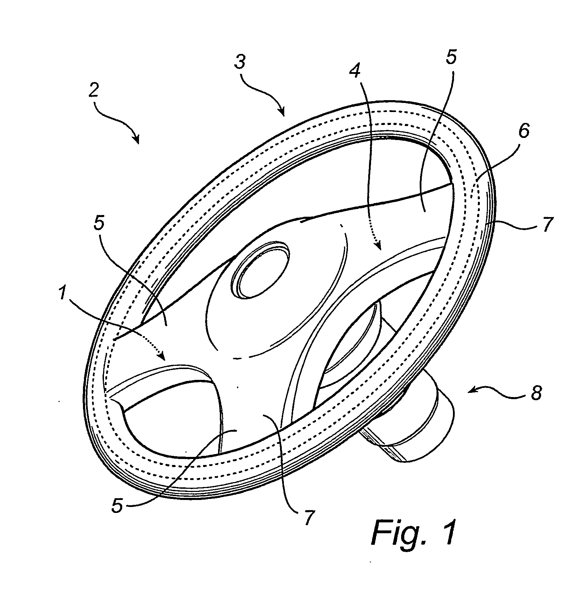

Fig. 1 shows selected parts of a vehicle steering wheel arrangement 2, in which a driver alert device 1 according to the present invention is arranged. The steering wheel 3 comprises a metal frame 4 having spokes 5 and a peripheral rim 6. The peripheral rim 6 may define a part of the metal frame 4 or a separate part connected to the metal frame 4, for instance via the spokes 5. The frame 4 and the rim 6 are at least partly covered with a suitable outer covering 7, such as a foam material. The steering wheel frame part 4 is connected to a hub (not shown), which is mounted to the steering wheel column 8.

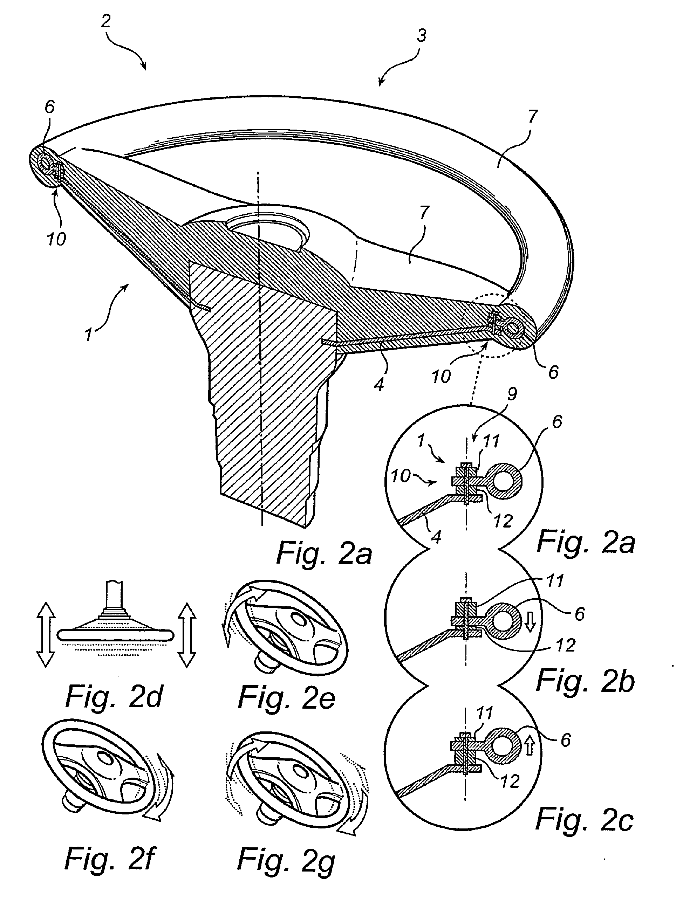

Fig. 2a shows a cross sectional view of the steering wheel assembly 2 shown in fig. 1. The steering wheel rim 6, which in this case defines a separate part, is connected to the steering wheel frame 4 by means of screw fastenings 9, see enlargement of fig. 2a. The steering wheel rim 6 and the steering wheel frame 4 are covered by an outer covering 7, in this case a PUR foam. The steering wheel arrangement 2 has a driver alert device 1 comprising a number of vibration actuator units 10 arranged in the region of a connection of parts of the steering wheel arrangement 2. Vibration actuator unit(s) may be arranged at several positions. Vibration actuator units 10 may be arranged to generate longitudinal and/or transversal vibrations. In this case two vibration actuator units 10 are arranged between the steering wheel frame 4 and the steering wheel rim 6. The units 10 are capable of generating different vibrations signals in the steering wheel directed perpendicular to a steering wheel plane. Each actuator unit 10 comprises a first 11 and a second 12 vibration generating element arranged in screw fastenings 9 connecting parts of the rim 6 to the steering wheel frame 4, see enlargement of fig. 2a. The vibrating generating elements 11, 12 are located on each side the connecting part of the steering wheel rim 6. The vibrating generating elements 11, 12 being spaced by the connecting part. Thus the vibration generating elements 11 and 12 may be arranged at a mounting screw or bolt. The enlargement of fig. 2a is shown to clearly illustrate a vibration actuator unit 10. The function of the alert device upon activation will be described. The screws in the screw fastenings 9 may be oriented towards the driver. That is the screws are oriented perpendicular to a steering wheel plane. With this orientation of the vibration actuator unit(s) vibrations towards and away from the driver may be generated. When a vibration unit is activated movement of the steering wheel rim relative the steering wheel frame is provided. The amplitude of the relative movement is sufficient to be perceivable by a driver. In this embodiment the vibrating elements in each actuator unit are formed by piezoelectric elements as known in the art. A voltage is coupled to each piezoelectric element. The piezoelectric elements are connected to a power and/or a control unit via cables (not shown). A vibration actuator unit is activated upon a signal from the control unit (not shown). Such control unit may receive and analyze input from various crash sensors, such as in-car sensors and/or pre-crash sensors and/or input from devices such as an IR-camera, device for detecting drowsiness of the driver. Upon activation of the vibration unit a voltage is coupled to each vibrating element causing them to vibrate. That is each vibrating element is forced to change between an extended state and a compressed state as long as the voltage is applied.

Fig. 2b and 2c show different states of an activated vibration unit having vibrating generating elements 11 and 12. In fig. 2b the vibration element 11 is extended and the vibration element 12 is compressed, while in fig. 2c the vibration element 11 is compressed and the vibration element 12 is extended. That is when one element is extended the other one is compressed, which can be realised by coupling the vibration elements 11 and 12 in each vibration unit 10 with inverted polarities. Thus the screwing joint may be undeformed during the relative movement of the steering wheel and loss of the screwing joint may be avoided.

As described the driver alert device may be activated upon a signal from a control unit. Depending on the emergency situation one or more vibration actuators may be activated and thus the resulting vibrating signal can be adapted to the situation. For instance the vibrations in a part of the steering wheel that corresponds to the left side of the vehicle may be more frequent than vibrations in a part corresponding to the right side of the vehicle in case a vehicle is approaching from the left. Correspondingly the vibrations may be more frequent in a part corresponding to the right side if a vehicle is approaching from the right.

Depending on the number of vibration units, the orientation and location of the vibration units different vibration combinations can be achieved. Fig. 2d, 2e, 2f and 2g show different steering wheel movements that can be provided having the vibration units arranged according to the embodiment described in fig. 2a. A relative movement of the steering wheel directed perpendicularly to the steering wheel plane may be generated, see fig. 2d. A relative movement of one part of the steering wheel directed perpendicularly to the steering wheel plane may be generated, see fig. 2e. A relative movement of another part of the steering wheel directed perpendicularly to the steering wheel plane may be generated, see fig. 2f. A tilting movement of the steering wheel around an axis parallel to the steering wheel plane may be generated, see fig. 2g. By variation of the intensity further combinations are possible.

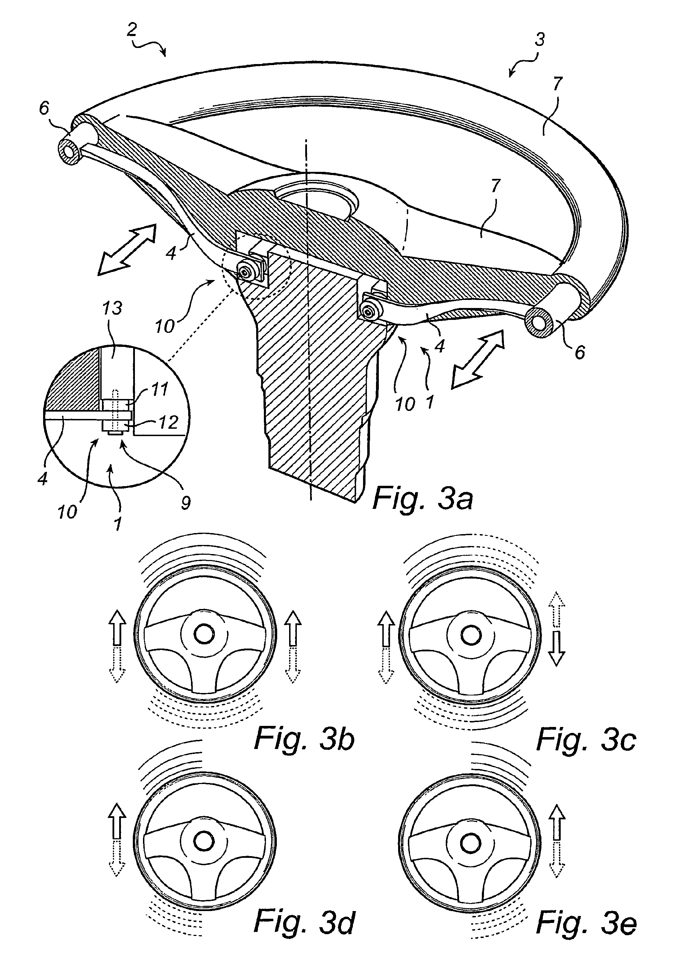

Fig. 3 shows another embodiment having vibration units 10 arranged in respective connections between the steering wheel frame 4 and a steering wheel hub 13. The enlargement shows one such vibration unit 10 having vibrating elements 11 and 12. The vibrating generating elements 11, 12 are located on each side the connecting part of the steering wheel frame 4. Thus, the vibrating generating elements 11, 12 being spaced by the connecting part. In this embodiment the vibration units are oriented parallelly to the steering wheel plane. Thus it is possible to generate vibrations in the steering wheel 3, parallelly to the steering wheel plane, as indicated by the arrows in fig. 3. Fig. 3b, 3c, 3d and 3f show different steering wheel movements that can be provided having the vibration units arranged according to the embodiment described in fig. 3. A relative movement of the steering wheel directed parallelly to the steering wheel plane may be generated, see fig. 3b. A rotational movement of the steering wheel around the centre of the steering wheel may be generated, see fig. 3c. A relative movement of a part of the steering wheel directed parallelly to the steering wheel plane may be generated, see fig. 3d. A relative movement of another part of the steering wheel directed parallelly to the steering wheel plane may be generated, see fig. 3e. By variation of the intensity further combinations may be possible.

It will be appreciated that the described embodiment of the invention can be modified and varied by a person skilled in the art without departing from the inventive concept defined in the claims.

For instance the driver alert system may be fitted in other types of steering wheel assemblies, such as fixed hub systems. Instead of using piezoelectric elements as vibration generating elements other suitable vibration generating elements, such as electromagnetic elements, may be used.

It may be possible to combine vibration units oriented perpendicular to a steering wheel plane with vibration units oriented in a steering wheel plane to provide further vibration combinations. Furthermore vibrations may be combined with an acoustic signal.

The control unit may receive information from an angle sensor as known in the art, arranged at the steering wheel, sensing the position of the steering wheel column. The angle sensor signal information can be used to determine the location of each vibration unit. The control unit may use this information to determine which vibration unit(s) to activate for instance when the steering wheel is turned.

## Claims

1. Driver alert device (1) for use in a vehicle to alert a driver by means of mechanical vibrations perceivable to the driver via the steering wheel (3), comprising at least one vibration actuator unit (10) arranged at the steering wheel (3), wherein said vibration actuator unit (10) is arranged in a region of a connection of parts of the steering wheel arrangement (2), comprises a first (11) and a second (12) vibration generating means, and is integrated in a connection between parts of the steering wheel arrangement (2), **characterized in that** the vibration generating means (11,12) is coupled in such a way that when one vibration generating means (11) is extending the other one (12) is compressed.

2. Device according to claim 1, wherein said vibration actuator unit (10) is capable of generating at least two distinguishable vibration signals in order to alert the driver in different situations.

3. Device according to claim 1 or 2, wherein activation of said vibration actuator unit (10) generates a relative movement between parts of the steering wheel arrangement (2).

4. Device according to claim 3, wherein said relative movement is directed perpendicularly to a steering wheel plane.

5. Device according to claim 3, wherein said relative movement is directed parallelly to a steering wheel plane.

6. Device according to any preceding claim, wherein the vibration actuator unit (10) is arranged in the region of the connection between a steering wheel rim (6) and a steering wheel spoke (5).

## Patentansprüche

1. Fahrerwarnvorrichtung (1) zur Verwendung in einem Fahrzeug, um einen Fahrer mittels mechanischer Vibrationen, die für den Fahrer über das Lenkrad (3) wahrnehmbar sind, zu warnen, umfassend zumindest eine Vibrationsantriebseinheit (10), die am Lenkrad (3) angeordnet ist, wobei die Vibrationsantriebseinheit (10) in einem Bereich einer Verbindung von Teilen der Lenkradanordnung (2) angeordnet ist, eine erste (11) und eine zweite (12) Vibrationserzeugungseinrichtung umfasst und in einer Verbindung zwischen Teilen der Lenkradanordnung (2) integriert ist, **dadurch gekennzeichnet, dass** die Vibrationserzeugungseinrichtung (11, 12) so gekoppelt ist, dass, wenn eine Vibrationserzeugungseinrichtung (11) ausgefahren wird, die andere (12) zusammengedrückt wird.

2. Vorrichtung nach Anspruch 1, wobei die Vibrationsantriebseinheit (10) imstande ist, zumindest zwei unterscheidbare Vibrationssignale zu erzeugen, um den Fahrer in verschiedenen Situationen zu warnen.

3. Vorrichtung nach Anspruch 1 oder 2, wobei die Aktivierung der Vibrationsantriebseinheit (10) eine relative Bewegung zwischen Teilen der Lenkradanordnung (2) erzeugt.

4. Vorrichtung nach Anspruch 3, wobei die relative Bewegung senkrecht zu einer Lenkradebene gerichtet ist.

5. Vorrichtung nach Anspruch 3, wobei die relative Bewegung parallel zu einer Lenkradebene gerichtet ist.

6. Vorrichtung nach irgendeinem vorhergehenden Anspruch, wobei die Vibrationsantriebseinheit (10) in dem Bereich der Verbindung zwischen einem Lenkradrand (6) und einer Lenkradspeiche (5) angeordnet ist.

## Revendications

1. Un dispositif d'alerte de conducteur (1) destiné à être utilisé dans un véhicule pour alerter le conducteur au moyen de vibrations mécaniques perceptibles par celui-ci par l'intermédiaire du volant de direction (3), ce dispositif comprenant au moins une unité d'actionnement de vibrations (10) placée sur le volant (3), l'unité d'actionnement de vibrations (10) se trouvant dans une région de liaison d'éléments du dispositif de volant (2), se composant d'un premier (11) et d'un deuxième (12) dispositifs de génération de vibrations et étant intégrée dans une liaison entre des parties du dispositif de volant (2), le dispositif d'alerte **se caractérisant par le fait que** les dispositifs de génération de vibrations (11, 12) sont raccordés de manière telle que lorsqu'un dispositif de génération de vibrations (11) s'allonge, l'autre (12) est compressé.

2. Un dispositif selon la revendication 1, dans lequel l'unité d'actionnement de vibrations (10) peut générer au moins deux signaux de vibrations distinguables afin d'alerter le conducteur dans des situations différentes.

3. Un dispositif selon la revendication 1 ou 2, dans lequel l'activation de l'unité d'actionnement de vibrations (10) entraîne un mouvement relatif entre des parties du dispositif de volant (2).

4. Un dispositif selon la revendication 3, dans lequel le mouvement relatif est dirigé perpendiculairement à un plan du volant.

5. Un dispositif selon la revendication 3, dans lequel le mouvement relatif est dirigé parallèlement à un plan du volant.

6. Un dispositif selon n'importe laquelle des revendications précédentes, dans lequel l'unité d'actionnement de vibrations (10) se trouve dans la région de liaison entre une jante du volant (6) et un rayon du volant (5).
